# EUROPEAN PATENT APPLICATION

(11) **EP 0 647 038 A1**
(43) Date of publication of application: **05.04.1995**
(21) Application number: 94306925.2
(22) Date of filing: 21.09.1994
(51) Int. Cl.: H04B 7/00

(54) **Method and apparatus for fading compensation in a radio voice communications system**

(30) Priority: 29.09.1993 US 128281
(71) Applicant: AT&T Corp., New York, NY 10013-2412 (US)
(72) Inventor: Embree, David Marlin, Randolph, New Jersey 07869 (US); Erving, Richard Henry, Piscataway, New Jersey 08854 (US); Miller II, Robert Raymond, Convent Station, New Jersey 07960 (US)
(74) Representative: Buckley, Christopher Simon Thirsk

(57) **Abstract**

An analog radio voice communicator includes a speech encoding system (131,133) that acts in series with normal analog speech processing. Normal corrupted speech is encoded during operation of the radio voice communicator. The signal strength of the incoming speech signal is monitored (by 121). During fades when the signal strength is below a threshold value a fade is recognized and the resultant noise signal remaining is ignored by the speech encoding system. A decoder (135) is included in the communicator and operates in cooperation with the encoder and responds to the fade and for the interval of the fade substitutes reconstructed speech in place of the noise signal. Reconstruction is based on the most likely characteristics of the voice signal wave form to follow the previous actual voice signal. This arrangement uses the filter coefficients generated by linear predictive coding techniques (131) and the excitation vectors (133) developed by excitation analysis to reconstruct the expected speech signal in a synthesis filter (135).

## Description

### FIELD OF THE INVENTION

This invention relates to mobile radio communication devices such as radiotelephones and in particular to compensating for fades in a radio voice communication channel.

### Background of the Invention

The propagation of radio communication signals transmitted to mobile analog communicators is subject to many propagation impairments. These impairments range from Rayleigh fades due to multipathing and scattering effects to shadow fading due to terrain effects incurred while the mobile communicator is in motion. Rayleigh fading is a short term phenomena that has a duration measured in a fraction of a second (i.e. multiple fades within a second). Despite the shortness of duration the Rayleigh fading has a significant impact on the received voice quality of the mobile radio communicator. A Rayleigh fade may result in a field strength reduction of up to 30 dB. This momentary interruption of the radio voice signal causes many gaps in the continuity of the signal which is readily apparent to the user in the output speech signal.

These gaps are particularly disruptive in FM radio systems. FM radio communication systems are subject to the phenomenon of phase slippage, when noise (i.e at low S/N) dominates the vector addition of the RF voltages corresponding to signals and noise. During these instants the composite IF waveform instantaneously encircling the complex plane origin causing an apparent phase change of 2π radians. The FM/phase detector responds to this phenomenon by producing individual Rice clicks. As the S/N ratio drops, these clicks merge into a crackling or sputtering noise whose amplitude is large relative to the normal speech output. These impairments are very disruptive to the speech quality.

The problem of voice degradation is ubiquitous in cellular radiotelephone systems using analog radiotelephones in present analog radiotelephone systems (i.e. AMPS). It is particularly aggravated by the fact that these radiotelephones are frequently used while in motion causing the fade rate to increase which further impairs the quality of communication. This may if aggravated enough affect the intelligibility of the speech to the recipient.

The cellular radiotelephone system handoff procedures also may cause a speech interruption problem similar in time duration to that experienced by active handset receivers in response to a fading condition. As the mobile radiotelephone moves away from an old cell toward a new cell the handoff process transfers the call to the new cell. This process of transfer includes the transmission of a blank and burst signal on the voice channel of the old cell preparatory to the handoff process. This blank and burst signal interrupts the speech signal at both the cell site and handset. This interruption appears to the user as a silent interval.

Another of short interruptions that cause voice degradation occurs in analog frequency hopping radio transmission at the short interval when a frequency change is implemented. At the change of frequency (i.e.the frequency hop) a click occurs which significantly degrades the voice quality.

A similar short interruption may also occur in radio communication systems in which space diversity is achieved by switching antennas.

### Summary of the Invention

An analog radio voice communicator includes a speech encoding system that acts in a series connection with normal analog speech processing. Normal speech is encoded during operation of the radio voice communicator. The signal strength of the incoming speech signal is monitored. During fades when the signal strength is below a threshold value a fade is recognized and the resultant noise signal remaining is ignored by the speech encoding system. A decoder is included in the communicator and operates in cooperation with the encoder and responds to the fade and for the interval of the fade substitutes reconstructed speech in place of the noise signal. Reconstruction is based on the most likely characteristics of the voice signal wave form to follow the previous actual voice signal. The illustrative exemplary arrangement, disclosed herein, uses the filter coefficients generated by linear predictive coding techniques and the excitation vectors developed by excitation analysis to reconstruct the expected speech signal in a synthesis filter.

The speech processing system is also arranged to respond to interruptions of the speech signal such as occur during blank and burst intervals to provide reconstructed speech during that interval.

In an analog frequency hopping communication system the speech processing system is arranged to respond to the periodic frequency changes (i.e. the frequency hops) and provide reconstructed speech at the frequency hop interval.

The speech processing system may be readily adapted to respond to any short term phenomena that interrupts or degrades the quality of speech. Such phenomena, for instance, may also include short term channel interference.

The speech processing system may be also arranged to respond to short interruptions such as induced by antenna switching in space diversity systems.

In an alternative arrangement a digital radio transmission system, in which the voice signal is uncoded, may use the arrangement described above to provide reconstruction of corrupted speech segments of a voice signal.

### Brief Description of the Drawing

FIG. 1 is a block schematic of a radio voice communicator;
FIG. 2 is a wave form diagram of the original speech wave forms and the reconstructed wave forms to compensate for fades.

### Detailed Description

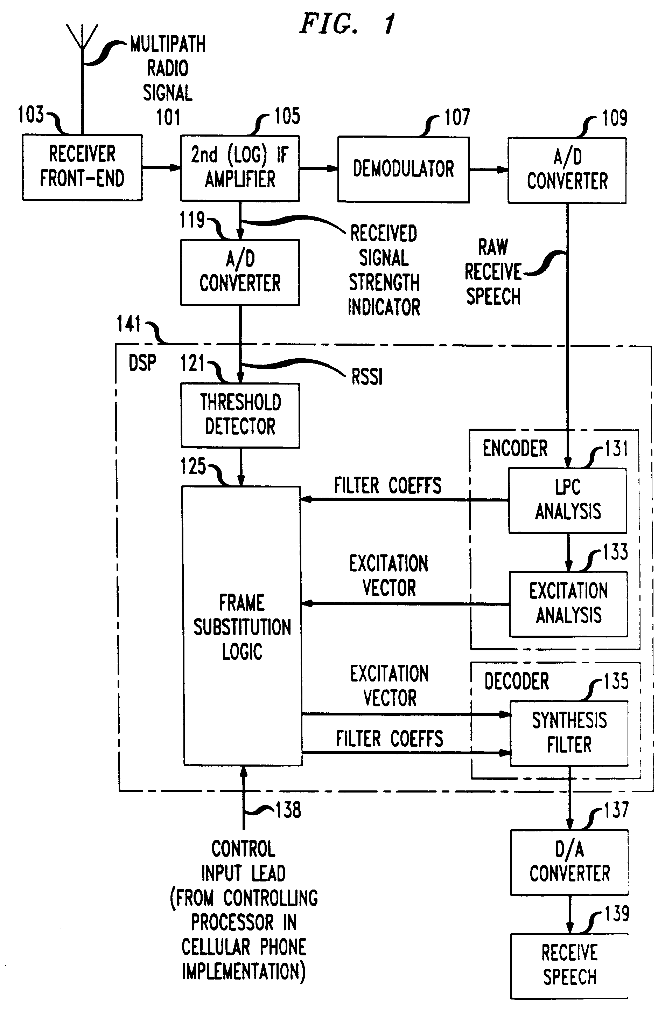

A voice processing circuit for a radio voice communicator is shown in the FIG. 1. This circuitry includes an antenna 101 for enabling the receipt of radio voice communication signals transmitted, via radio signals over a voice communication channel. The radio signals received by the antenna 101 are coupled to the front end 103 of a radio receiver and subsequently applied to a IF amplifier 105. The signal strength received by the IF amplifier is converted to a digital representation by the A/D converter 119. This signal strength is responsive to fades in the radio signal, whereby a fade is indicated by a significant drop in the signal strength level. The digital signal strength level is compared with a digital threshold in the threshold detector 121 and the output indicating a drop below the threshold level of acceptable signal strength is applied to the substitution logic circuit 125 whose response is discussed below.

The converted radio signal is coupled at the IF frequency to a demodulator 107 to extract the analog voice signal. The A/D converter 109 digitizes the analog voice signal into a digital representation. This digital representation is applied, in the illustrative embodiment herein, to a Linear Predictive Coder (LPC) which utilizes the predictive correlation of speech to generate filter or predictor coefficients 131 (i.e. representative of a speech sample and of a succeeding adjacent speech sample) which are applied to an input of the substitution logic circuit 125. The excitation analysis circuit 133 determines the excitation vector of the speech and applies these excitation vectors to the substitution logic circuit 125.

The substitution logic circuit 125 is responsive to the threshold detector 121 so that at low signal strength the encoded speech signals during a fade (i.e. noise) are replaced by a substitution of predicted speech coefficients for the duration of the fade. These predictive elements, in LPC, are anticipated values for the encoded speech based on known properties of human speech built into the encoding coefficients. These derived speech elements are included in the stream of excitation and filter coefficients in substitution for the actual encoded noise elements.

The output of the substitution logic circuit is applied to a synthesis filter 135 which recreates the digital speech elements. These digital elements are applied to a digital-to-analog converter 137 whose output on lead 139 is the reconstructed analog speech carried by the radio voice channel. While the components for substitution of predicted elements for speech during a face has been depicted as performed by discrete logical components, these components encircled by the dotted line 141 may be comprised by a digital signal processor (DSP) under control of a stored program.

The substitution circuit 125, which is included in a cellular radiotelephone includes a control input lead 138 which is connected to respond to an interruption of speech signals. Such an interruption may be due to its blank and burst circuitry. When the blank and burst circuitry is activated it applies a signal on lead 138 that causes the substitution logic circuit to respond in the same manner as its response to a reduced signal strength.

This lead 138 may also be connected to be responsive to the frequency change circuitry of an analog mobile radiotelephone operating in a frequency hopping communication system. In this arrangement the substitution logic circuit responds to a change in frequency (i.e. a frequency hop) and provide reconstructed speech at the interval of frequency change to the speech output.

In another arrangement the lead 138 may be connected to respond to antenna changes such as occur in a space diversity system which switches among plural antennas.

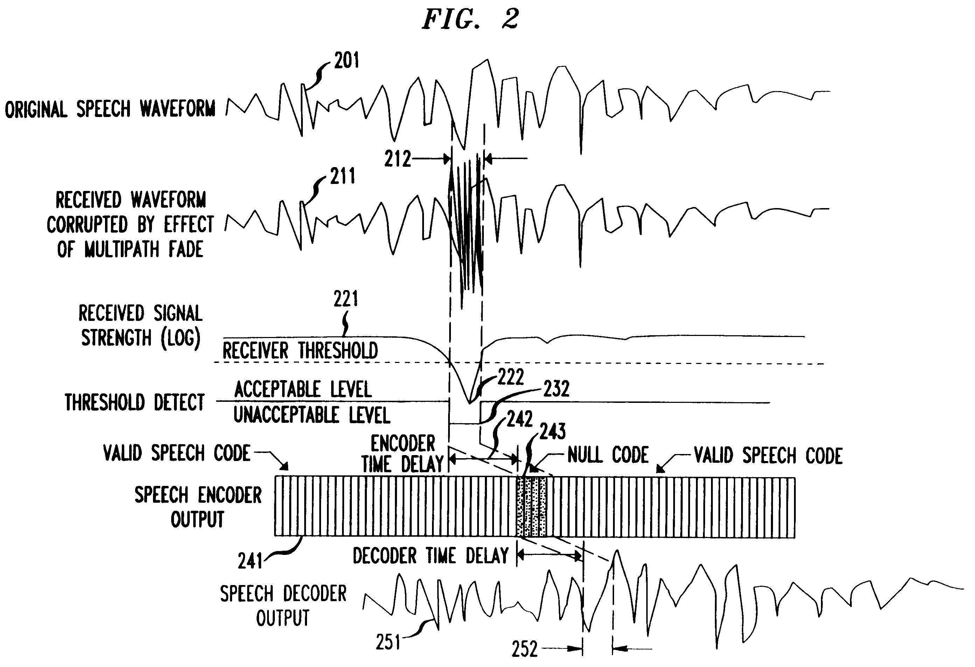

The dynamics of the substitution process may be readily understood by the display of the process wave forms shown in the FIG. 2. The original speech signal is represented by the wave form 201 in FIG. 2. During radio transmission this speech signal is subject to fades such as indicated in the time interval 212 in the wave form 211. A signal strength indicator responds to the log value of the signal and produces an indication of the fade such as shown by the log value 222 of wave form 221. The threshold detector produces a pulse output 232 for the duration of the fade.

The received speech signal is encoded into frames. These frames are shown symbolically in 241 in which the time delay of the code with respect to the analog speech is shown by delay 242 and the null period generated in response to the threshold detector is shown by the interval 243. The output of the speech decoder is shown by the wave form 251 and in the interval 252 includes a wave form portion as predicted by the linear predictive encoding. Output speech wave form 251 is the enhanced speech wave form version including the predictive wave form portion to replace the fade induced or otherwise corrupted analog speech version.

While the illustrative embodiment uses linear predictive coding and vector excitation, the invention may be practiced using alternative speech coding techniques. An example is the conversion of demodulated speech into any type vocal tract model with associated excitation vectors. In such an arrangement the vocal tract model is constructed from the speech and is used during a fade or other interruption to provide speech. In general speech reconstruction may be derived from any substitution of speech segments reconstructed from known good speech which is substituted for corrupted speech designated as corrupted or impaired based on any standard of desired speech.

While described in the context of an analog radio communication system, the principles of the invention may be applied to digital radio transmission systems in which the digital transmission is uncoded. In this arrangement the uncoded digital speech would be encoded for the generation of substitution speech segments. Implementation of this arrangement is within the purview of those skilled in the art and need not be discussed in detail.

An alternative application of the invention is to spread spectrum frequency hopping analog radio communication systems in which the frequency is periodically changed in a pseudo random process selecting channels from a group of preselected channels. This has previously been impracticable because of the noise disturbances caused by the frequency transitions during frequency hopping. The speech construction arrangement of the invention is used however to reconstruct the speech signal at the interval of the frequency transmissions. The use of these and many other various alternative techniques will be readily obvious to those skilled in the art with out departing from the spirit and scope of the invention as claimed.

## Claims

1. A method for compensating for corrupted speech segments in a radio communication system;
comprising the steps of:
detecting a corrupted speech interval in a received voice signal;
estimating,based on known good voice signal information a suitable replacement voice signal segment;
inserting the suitable voice signal segment in place of the corrupted voice signal segment; and
outputting the suitable voice signal segment as part of the speech signal output of the radio communication system.

2. A method for compensating for corrupted speech segments in a radio communication system; as claimed in claim 1:
wherein the step of:
detecting a corrupted speech interval includes detecting a fade in signal strength of the received voice signal.

3. A method for compensating for corrupted speech segments in a radio communication system; as claimed in claim 1:
wherein the step of:
detecting a corrupted speech interval includes the step of detecting a system muting of the received voice signal.

4. A method for compensating for corrupted speech segments in a radio communication system; as claimed in claim 1:
wherein the step of:
detecting a corrupted speech interval includes the step of detecting a blank and burst interval.

5. A method for compensating for corrupted speech segments in a radio communication system; as claimed in claim 1:
wherein the step of:
estimating a voice signal replacement includes a step of encoding the voice signal in a vocal tract models format.

6. A method for compensating for corrupted speech segments in a radio communication system; as claimed in claim 1:
wherein the step of:
estimating a voice signal replacement includes a step of encoding the voice signal in a linear predictive coded format.

7. A method for compensating for corrupted speech segments in a radio communication system; as claimed in claim 1:
wherein the step of:
detecting a corrupted speech interval includes the step of detecting a switch of antennas in a radio communication system with space diversity.

8. A method for compensating for corrupted speech segments in a radio communication system; as claimed in claim 1:
wherein the step of:
estimating a voice signal replacement includes a step of continuously estimating the voice future voice signal and substituting future voice signal segments for the corrupted voice signal segment.

9. An analog radiotelephone for use in a cellular radiotelephone communication system comprising:
the analog radio telephone including radio signal reception means and means for processing received radio telecommunication signals;
the means for processing including;
means (105) for detecting a signal strength of a received radio telecommunication signal;
means (121) responsive to the means for detecting and comparing the signal strength to a threshold;
means (107) for demodulating the received radio telecommunication signal;
means (109) connected to the means for demodulating for converting the demodulated speech signal into a digital speech format;
means (131) connected to the means for converting for encoding the demodulated speech signal in a linear predictive coded format and supplying speech filter coefficients therefrom;
means (133) responsive to the means for encoding for generating excitation vectors from the linear predictive coded format;
a logic circuit (125) connected for receiving the speech filter coefficients and the excitation vectors and transmitting frames of the coefficients and the excitation vectors and transmitting frames of the coefficients and vectors to logic circuit outputs, means for constructing probable speech filter coefficients and excitation vectors likely to appear in near future frames and responsive to the means for comparing for inserting constructed speech filter coefficients and excitation vectors into the frames occurring at a signal strength below threshold;
a synthesis filter (135) connected to the logic circuit outputs for reconstructing a digital speech signal from speech filter coefficients and excitation vectors;
means (137) connected to the synthesis filter for deriving an analog speech signal.
